# EUROPEAN PATENT APPLICATION

(11) **EP 3 749 026 A1**
(43) Date of publication of application: **09.12.2020**
(21) Application number: 18904488.6
(22) Date of filing: 31.01.2018
(51) Int. Cl.: H04W 56/00, H04W 76/00, H04W 92/18

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuaki, Chiyoda-ku Tokyo 100-6150 (JP); NAGATA, Satoshi, Chiyoda-ku Tokyo 100-6150 (JP); IWAMURA, Mikio, Chiyoda-ku Tokyo 100-6150 (JP)
(74) Representative: Hoffmann Eitle
(86) International application number: PCT/JP2018/003210
(87) International publication number: WO 2019/150486

(57) **Abstract**

A user terminal is a user terminal of a first category that supports a channel bandwidth equal to or narrower than an indispensable channel bandwidth defined per subcarrier spacing for a user terminal of a second category, and includes: a reception section that receives at least one of a synchronization signal and a broadcast channel; and a control section that controls reception of system information that is mapped in a given bandwidth equal to or narrower than the indispensable channel bandwidth.

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE Advanced (LTE-A), Future Radio Access (FRA), 4G, 5G, 5G+ (plus), New RAT (NR), 3^{rd} Generation Partnership Project (3GPP) and LTE Rel. 14, 15 and 16∼) have been also studied.

For example, Rel. 13 supports a user terminal (UE: User Equipment) that performs communication in a narrow band such as enhanced Machine Type Communication (eMTC) and Narrowband-Internet of Things (NB-IoT). For example, it is assumed for eMTC that a channel bandwidth of the user terminal is limited to 1.4 MHz (a transmission bandwidth is 1.08 MHz), and a peak data rate is 1 Mbps. A user terminal for eMTC (also referred to as, for example, an eMTC terminal or an eMTC UE) will be also referred to as, for example, a Category (Cat) M1 or M2.

For example, it is assumed for NB-IoT that a channel bandwidth of the user terminal is limited to 200 kHz (a transmission bandwidth is 180 kHz), and a peak data rate is 250 kbps. A user terminal for NB-IoT (also referred to as, for example, an NB-IoT terminal or an NB-IoT UE) will be also referred to as, for example, a Category (Cat) NB1 or NB2.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

According to Rel. 15 (also referred to as, for example, 5G or NR), user terminal designs are being developed assuming a use case of a high speed and a large capacity (e.g., eMBB: enhanced Mobile Broad Band) and a use case of ultra reliability and low latency (e.g., URLLC: Ultra Reliable and Low Latency Communications).

According to, for example, Rel. 15, an indispensable channel bandwidth (also referred to as, for example, a minimum indispensable channel bandwidth or a minimum channel bandwidth) in which system information (e.g., RMSI: Remaining Minimum System Information) is mapped is specified per band (NR band or frequency range) and per subcarrier.

On the other hand, it is also assumed for Rel. 16 and subsequent releases (also referred to as, for example, 5G+ or NR) to support a user terminal (also referred to as, for example, an NR MTC UE or an NR MTC terminal) of a new category assuming use cases and requirement conditions identical to and/or different from those of the above eMTC terminal or NB-IoT terminal. For example, it is expected that the NR-MTC terminal has performance equal to or higher than that of the eMTC terminal or the NR-IoT terminal, and performance (middle-class performance such as a channel bandwidth smaller than 20 MHz and a peak data rate of approximately 1 to 100 Mbps) lower than that of the user terminal for eMBB (also referred to as, for example, an eMBB terminal or an eMBB UE).

However, in a case where a user terminal (e.g., NR MTC terminal) of a category different from those of Rel. 15 and prior releases is introduced to Rel. 16 and subsequent releases, a channel bandwidth supported by the user terminal is narrower than the indispensable channel bandwidth specified by Rel. 15 and, as a result, there is a risk that the user terminal cannot obtain system information (e.g., RMSI) that is mapped in the indispensable channel bandwidth.

The present invention has been made in light of this point, and one of objects of the present invention is to provide a user terminal that is a user terminal (e.g., NR MTC terminal) of a category different from those of 3GPP Rel. 15 and prior releases and can appropriately obtain system information, and a radio communication method.

### Solution to Problem

One aspect of a user terminal according to the present invention is a user terminal of a first category that supports a channel bandwidth equal to or narrower than an indispensable channel bandwidth defined per subcarrier spacing for a user terminal of a second category, and includes: a reception section that receives at least one of a synchronization signal and a broadcast channel; and a control section that controls reception of system information that is mapped in a given bandwidth equal to or narrower than the indispensable channel bandwidth.

### Advantageous Effects of Invention

According to the present invention, a user terminal (e.g., NR MTC terminal) of a category different from user terminals of 3GPP Rel. 15 and prior releases can appropriately obtain system information.

### Brief Description of Drawings

Fig. 1 is a diagram illustrating one example of a channel bandwidth per subcarrier spacing.
Fig. 2 is a diagram illustrating one example of an initial access procedure.
Fig. 3 is a diagram illustrating one example of mapping of RMSI.
Fig. 4 is a diagram illustrating one example of an initial access procedure according to a first aspect.
Figs. 5A and 5B are diagrams illustrating one example of an initial access procedure according to a second aspect.
Fig. 6 is a diagram illustrating one example of an initial access procedure according to a third aspect.
Fig. 7 is a diagram illustrating one example of a schematic configuration of a radio communication system according to the present embodiment.
Fig. 8 is a diagram illustrating one example of an overall configuration of a radio base station according to the present embodiment.
Fig. 9 is a diagram illustrating one example of a function configuration of the radio base station according to the present embodiment.
Fig. 10 is a diagram illustrating one example of an overall configuration of a user terminal according to the present embodiment.
Fig. 11 is a diagram illustrating one example of a function configuration of the user terminal according to the present embodiment.
Fig. 12 is a diagram illustrating one example of hardware configurations of the radio base station and the user terminal according to the present embodiment.

### Description of Embodiments

It has been studied for future radio communication systems (e.g., Rel. 15 and subsequent releases) to support a channel bandwidth of 400 MHz at maximum in a frequency range higher than 6 GHz, and support a channel bandwidth of 100 MHz at maximum in a frequency range lower than 6 GHz.

In this regard, the channel bandwidth is a frequency bandwidth including a transmission bandwidth (also referred to as, for example, a transmission bandwidth configuration (N_{RB})) including one or more resource blocks (Physical Resource Blocks (PRBs)), and guard bands provided at both edges of the transmission bandwidths. The channel bandwidth may be referred to as a system bandwidth or a transmission bandwidth or simply as, for example, a frequency band. At least one of uplink communication and downlink communication is performed by using at least one active RB in the transmission bandwidth in the channel bandwidth.

A channel bandwidth (BS channel bandwidth) of a radio base station (also referred to as, for example, a gNB: gNodeB or simply as a base station) is assumed to be processed by a single Radio Frequency (RF) chain (also referred to as, for example, an RF carrier, a transmission/reception section or an RF processing section).

On the other hand, a channel bandwidth (UE channel bandwidth) of a user terminal (e.g., UE: User Equipment) may be processed by a single RF chain (also referred to as, for example, an RF carrier, a transmission/reception section or an RF processing section) or may be processed by using a plurality of RF chains. When, for example, a plurality of RF chains are used, each of a plurality of these RF chains may be associated with a partial different band in the UE channel bandwidth.

Furthermore, when a plurality of RF chains are used, a baseband signal processing section of the user terminal may aggregate (Carrier Aggregation (CA) (intra-band CA) a plurality of CCs assuming a band of 1 RF chain as 1 Component Carrier (also referred to as, for example, a CC, a carrier or a cell), and realize the channel bandwidth. Alternatively, the baseband signal processing section may aggregate bands of a plurality of RF chains as 1 CC, and realize the channel bandwidth.

Capability information of the user terminal related to these RF chains may be reported as UE capability from the user terminal to the radio base station. The radio base station can concurrently communicate with a plurality of user terminals that have identical and/or different channel bandwidths.

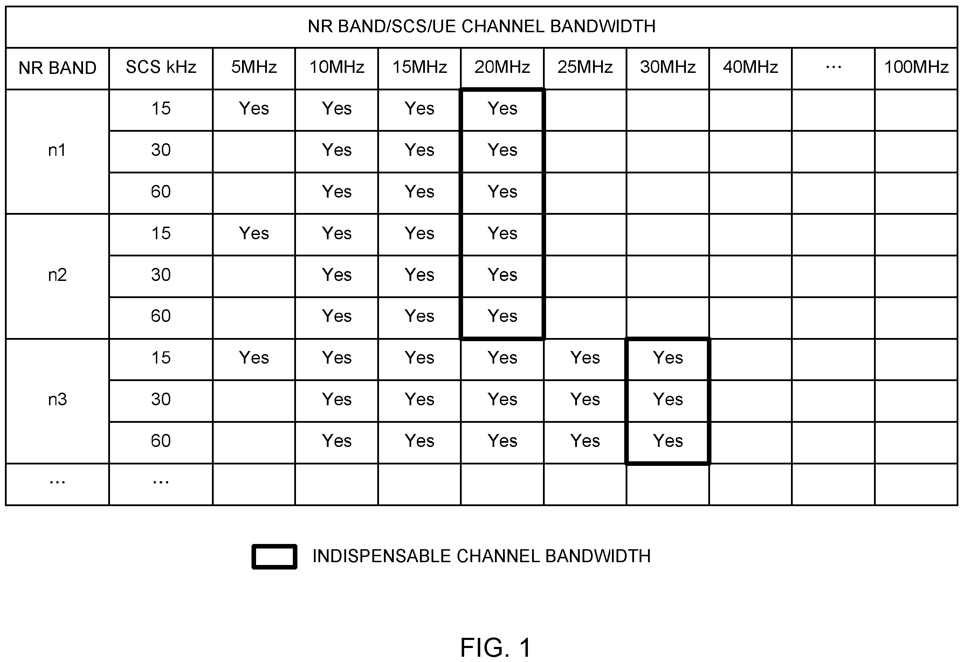

The above-described channel bandwidth of the user terminal (UE channel bandwidth) is defined per Subcarrier Spacing (SCS). Fig. 1 is a diagram illustrating one example of support of a channel bandwidth per subcarrier spacing. Fig. 1 illustrates part of contents specified by TS38101-1 v1.0.0 (2017-12).

For example, an NR band n1 in Fig. 1 supports channel bandwidths of 5 MHz, 10 MHz, 15 MHz and 20 MHz when the subcarrier spacing is 15 kHz, and supports 10 MHz, 15 MHz and 20 MHz when the subcarrier spacing is 30 kHz or 60 kHz. Similarly, for other NR bands, channel bandwidths supported per subcarrier spacing are indicated.

Thus, in Fig. 1, the user terminal needs to support channel bandwidths specified as "Yes" in NR bands to use and subcarrier spacings to use. Hence, a maximum channel bandwidth that is specified as "Yes" in each NR band and each subcarrier spacing may be referred to as an "indispensable channel bandwidth". In Fig. 1, the user terminal can expand a bandwidth used for a channel bandwidth (e.g., 100 MHz at maximum in Fig. 1) that is not specified as "Yes". Hence, the indispensable channel bandwidth may be referred to as, for example, a minimum indispensable channel bandwidth or a minimum channel bandwidth.

In addition, Fig. 1 assumes one example of a case where a channel bandwidth of 100 MHz at maximum is supported in a frequency range lower than 6 GHz. As illustrated in Fig. 1, the channel bandwidth supported per NR band and/or per subcarrier spacing may differ. For example, in Fig. 1, the channel bandwidths supported in a case of 15 kHz in subcarrier spacing of the NR band n1 are 5 MHz, 10 MHz, 15 MHz and 20 MHz, and the indispensable channel bandwidth (the minimum channel bandwidth or the minimum indispensable channel bandwidth) is 20 MHz. On the other hand, the indispensable channel bandwidth in a case of 30 kHz or 60 kHz in subcarrier spacing of the NR band n1 is also 20 MHz.

The future radio communication systems are assumed to transmit system information (e.g., RMSI) in at least part of the above indispensable channel bandwidth. Alternatively, a bandwidth specified as 96 PRBs in a case where the subcarrier spacing is 15 kHz may be transmitted (this may be referred to as a minimum channel bandwidth, an RMSI bandwidth, an initial active Bandwidth Part (BWP) bandwidth or an indispensable channel bandwidth).

The radio base station cannot recognize what channel bandwidth the user terminal supports before an initial access procedure. By transmitting the system information in the indispensable channel bandwidth (e.g., 20 MHz of the NR band in Fig. 1), a plurality of user terminals having given channel bandwidths (e.g., 100 MHz at maximum in the frequency range lower than 6 GHz) can refer to the system information.

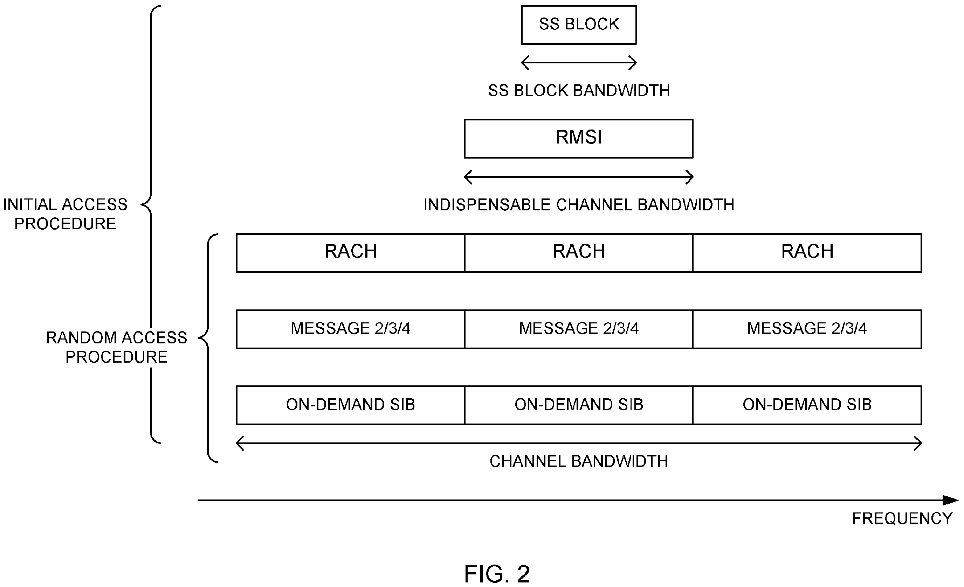

Fig. 2 is a diagram illustrating one example of the initial access procedure. As illustrated in Fig. 2, the initial access procedure may include at least one of detection of synchronization signals (e.g., a Primary Synchronization Signal (a PSS or an NR-PSS) and/or a Secondary Synchronization Signal (an SSS or an NR-SSS)), reception of broadcast information (e.g., MIB: Master Information Block) via a broadcast channel (e.g., PBCH: Physical Broadcast Channel), reception of system information (e.g., RMSI) and the random access procedure.

For example, in Fig. 2, the user terminal detects a Synchronization Signal Block (SSB) in a given bandwidth (e.g., 20 PRBs or 3.6 MHz). In this regard, the SSB is a resource (also referred to as, for example, a resource set or a block) including at least one of a PSS, an SSS and a PBCH.

For example, the user terminal may assume that a signal to be received in the SSB associated with an identical SSB index (a time index associated with the SSB) has been transmitted by an identical transmission beam. The UE can detect the SSB index from the signal in the SSB. The given bandwidth in which the SSB is detected will be also referred to as, for example, an SSB bandwidth and an SSB transmission bandwidth.

The user terminal receives RMSI that is mapped in the indispensable channel bandwidth based on information (e.g., information transmitted on a PBCH) detected in the SSB. By mapping the RMSI in the indispensable channel bandwidth, it is possible to obtain a frequency diversity gain of the RMSI.

The user terminal starts a random access procedure based on the RMSI. More specifically, the user terminal transmits a Random Access Channel (RACH) (also referred to as a Physical Random Access Channel (PRACH), a random access preamble or a message 1).

Furthermore, the user terminal receives a Random Access Response (an RAR or a message 2) from the radio base station, establishes uplink synchronization, and transmits a control message (that may include a message 3 or capability information of the user terminal (UE capability)) of a higher layer by using a PUSCH. The radio base station transmits a contention resolution message (message 4) by using a PDSCH according to the control message. Furthermore, the radio base station may transmit an on-demand System Information Block (SIB) (also referred to as, for example, OSI: Other System Information) by using the PDSCH according to a request from the user terminal.

As illustrated in Fig. 2, a channel bandwidth that is wider than the indispensable channel bandwidth and supported by the user terminal may be used in the random access procedure. In addition, in Fig. 2, a channel bandwidth wider than the indispensable channel bandwidth is used in the entire random access procedure. However, the channel bandwidth may be used in at least part of the random access procedure, or the channel bandwidth may be used after the random access procedure.

By the way, legacy LTE systems (e.g., Rel. 13) support a user terminal that performs communication in a narrow band similar to, for example, eMTC and NB-IoT. For example, it is assumed that a channel bandwidth of an eMTC terminal is 1.4 MHz (a transmission bandwidth is 1.08 MHz) and a peak data rate is 1 Mbps. The eMTC terminal will be also referred to as, for example, a Category (Cat) M1 or M2.

Furthermore, it is assumed that a channel bandwidth of an NB-IoT terminal is 200 kHz (the transmission bandwidth is 180 kHz) and a peak date rate is 250 kbps. The NB-IoT terminal will be also referred to as, for example, a Category (Cat) NB1 or NB2.

On the other hand, according to Rel. 15 (also referred to as, for example, 5G or NR), user terminal designs are being developed assuming a use case of a high speed and a large capacity (e.g., eMBB) and a use case of ultra reliability and low latency (e.g., URLLC). For example, according to Rel. 15, in a specific frequency range that is a frequency range lower than 6 GHz, the indispensable channel bandwidth is specified as 20 MHz (see Fig. 1).

On the other hand, it has been also assumed for Rel. 16 and subsequent releases (also referred to as, for example, 5G+ or NR) to support a user terminal (also referred to as, for example, an NR MTC UE or an NR MTC terminal) of a new category that assumes uses cases and requirement conditions identical to and/or different from those of the above eMTC terminal or NR-IoT terminal.

More specifically, the NR MTC terminal is expected to have performance that is equal to or higher than that of the eMTC terminal or NB-IoT terminal, and performance (middle-class performance) that is not as high as that of the eMBB terminal. For example, an NR band (carrier frequency) of 3.5 GHz, a subcarrier spacing of 30 kHz or 60 kHz, a channel bandwidth narrower than 20 MHz and a peak data rate of 1 to 100 Mbps are assumed for the NR MTC terminal. Furthermore, the NR MTC terminal is also assumed to, for example, support a service of ultra reliability and low latency such as URLLC (e.g., a Transmission Time Interval (TTI) shorter than a TTI of 1 ms).

However, when a user terminal (e.g., NR MTC terminal) of a different category from those of Rel. 15 and prior releases is introduced to Rel. 16 and subsequent releases, a channel bandwidth supported by the user terminal is narrower than the indispensable channel bandwidth specified by Rel. 15 and, as a result, there is a risk that the user terminal cannot obtain system information (e.g., RMSI) that is mapped in the indispensable channel bandwidth.

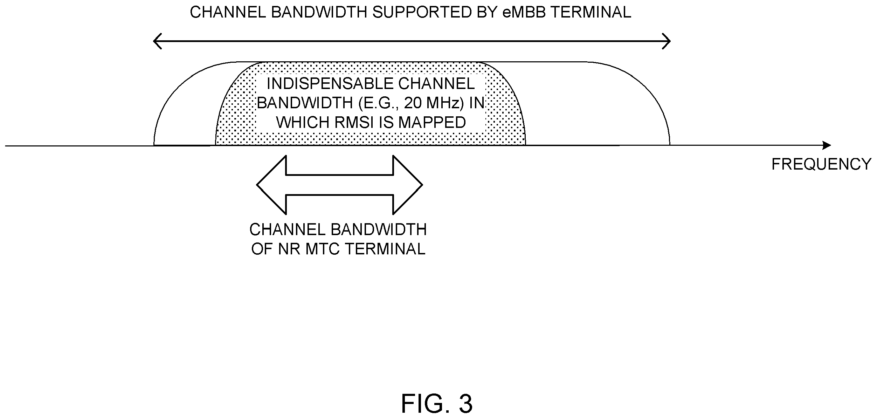

Fig. 3 is a diagram illustrating one example of mapping of RMSI. In addition, although Fig. 3 illustrates the RMSI as system information, as long as the system information is conveyed by using a downlink shared channel (e.g., PDSCH: Physical Downlink Shared Channel), a name of the system information is not limited to the RMSI.

As illustrated in Fig. 3, the radio base station maps the RMSI at 20 MHz in indispensable channel bandwidth (see Fig. 1). The eMBB terminal starts a random access procedure based on the RMSI obtained in the indispensable channel bandwidth. After the random access procedure, the eMBB terminal may expand a frequency bandwidth to use from the indispensable channel bandwidth to a supported maximum channel bandwidth (e.g., 40 MHz or 100 MHz at maximum in the frequency range lower than 6 GHz).

On the other hand, in a case where the channel bandwidth of the NR MTC terminal is defined narrower than 20 MHz as illustrated in Fig. 3, there is a risk that the NR MTC terminal cannot obtain the RMSI that is transmitted in at least part of the indispensable channel bandwidth. When, for example, a Resource Block Group (RBG) including 2 PRBs, 4 PRBs, 8 PRBs or 16 PRBs is used as a resource unit of the NR MTC terminal, the channel bandwidth of the NR MTC terminal is 0.36 MHz, 0.72 MHz, 1.44 MHz or 2.88 MHz. However, each channel bandwidth does not reach 20 MHz in indispensable channel bandwidth, and therefore there is a risk that the NR MTC terminal cannot receive the RMSI that is mapped in the indispensable channel bandwidth.

Hence, the inventors of the present invention have studied a method that enables a user terminal (e.g., NR MTC terminal) of a different category from those of 3GPP Rel. 15 or prior releases to appropriately obtain system information (e.g., RMSI), and reached the present invention. More specifically, the inventors of the present invention have found that, by appropriately defining a given bandwidth in which the system information is mapped, the NR MTC terminal can appropriately obtain the system information without depending on control based on scheduling.

One embodiment of the present invention will be described in detail below with reference to the drawings. In addition, the eMBB terminal will be exemplified as one example of a user terminal of a category (second category) supported by Rel. 15, yet is not limited to this. Furthermore, the NR MTC terminal will be exemplified as one example of a user terminal of a category (first category) supported by Rel. 16 and subsequent releases, yet is not limited to this, and may be user terminals of any categories that are not specified by Rel. 15 and prior releases.

Furthermore, although the RMSI will be exemplified as the system information below, as long as the system information is conveyed by using a downlink shared channel (e.g., PDSCH), a name of the system information is not limited to the RMSI. Furthermore, the "indispensable channel bandwidth" may be paraphrased as, for example, a minimum channel bandwidth, a minimum indispensable channel bandwidth, a bandwidth (RMSI bandwidth) in which the RMSI is transmitted or a bandwidth for an initial active Bandwidth Part (initial active BWP).

### (First Aspect)

According to the first aspect, an NR MTC terminal supports an indispensable channel bandwidth that is specified for an eMBB terminal. The indispensable channel bandwidth that is specified for the eMBB terminal is 20 MHz.

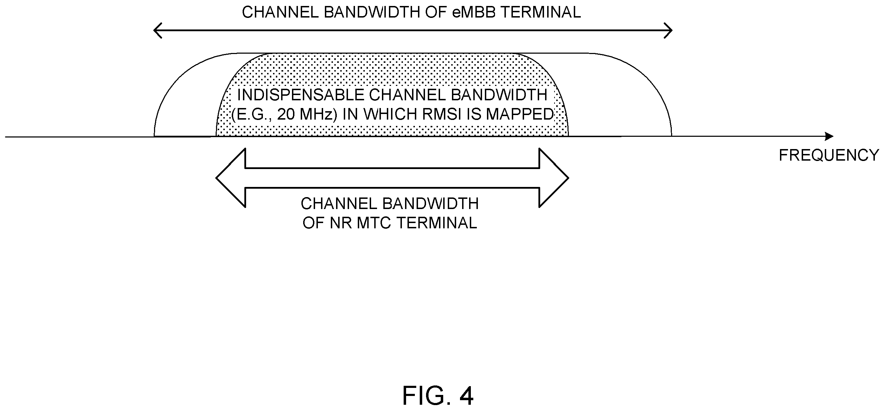

Fig. 4 is a diagram illustrating one example of an initial access procedure according to the first aspect. Fig. 4 assumes that, for example, the eMBB terminal supports a channel bandwidth of 20 MHz in a case of 30 kHz or 60 kHz in subcarrier spacing (see Fig. 1). In addition, Fig. 4 assumes that the eMBB terminal and the NR MTC terminal detect SSBs in unillustrated SSB bandwidths, and receive PBCHs.

As illustrated in Fig. 4, a radio base station maps RMSI in an indispensable channel bandwidth (e.g., 20 MHz) in an NR band n1. The eMBB terminal detects the SSB in the SSB bandwidth (e.g., 20 PRBs), and receives the RMSI transmitted in the indispensable channel bandwidth based on information (e.g., information transmitted on the PBCH) detected in the SSB. The eMBB terminal starts a random access procedure based on the RMSI obtained in the indispensable channel bandwidth.

In Fig. 4, the NR MTC terminal supports at least the indispensable channel bandwidth (e.g., 20 MHz) for the eMBB terminal. That is, the NR MTC terminal supports at least a channel bandwidth equal to the indispensable channel bandwidth per subcarrier spacing specified for the eMBB terminal.

In Fig. 4, the NR MTC terminal detects the SSB in the SSB bandwidth (e.g., 20 PRBs), and receives the RMSI transmitted in the indispensable channel bandwidth that is common to the eMBB terminal based on information (e.g., information transmitted on the PBCH) detected in the SSB.

According to the first aspect, the radio base station can map the RMSI in the indispensable channel bandwidth that is common between the eMBB terminal and the NR MTC terminal. Consequently, it is possible to suppress an increase in a load of transmission control of the RMSI in the radio base station.

### (Second Aspect)

According to the second aspect, an NR MTC terminal supports a transmission bandwidth (an SSB bandwidth that is, for example, 20 PRBs) of an SSB (a block including at least one of a synchronization signal and a broadcast channel).

The NR MTC terminal performs an initial access procedure in the SSB bandwidth. The initial access procedure may include at least one of detection of an SS included in the SSB, reception of a PBCH included in the SSB, reception of RMSI and a random access procedure.

According to the second aspect, the RMSI for the NR MTC terminal is mapped in the SSB bandwidth. The NR MTC terminal may detect the SSB in the SSB bandwidth, and receive the RMSI that is mapped in the SSB bandwidth based on information included in the PBCH.

Furthermore, when the SSB bandwidth includes 20 PRBs, a unit (e.g., an RBG size) of resource allocation to the NR MTC terminal may be 2 or 4 PRBs. 20 PRBs are a multiple of the 2 or 4 PRBs (are not a multiple of 8 or 16 PRBs), so that it is possible to improve frequency resource use efficiency by making the RBG size the 2 or 4 PRBs.

On the other hand, RMSI for an eMBB terminal may be mapped in an indispensable channel bandwidth. The eMBB terminal may detect an SSB in an SSB bandwidth, and receive the RMSI that is mapped in the indispensable channel bandwidth based on information included in a PBCH. Consequently, it is possible to obtain a frequency diversity effect of the RMSI.

According to the second aspect, a user terminal (e.g., the eMTC terminal or the NB-IoT terminal) of a category for narrow band communication introduced in a legacy LTE system (e.g., Rel. 13) may support the initial access procedure based on the SSB in the SSB bandwidth and the RMSI. Consequently, the user terminal can operate in a channel bandwidth (e.g., 1.4 MHz or 200 kHz) of a narrow band in future radio communication systems (e.g., Rel. 16 and subsequent releases), too.

In addition, the user terminal (e.g., the eMTC terminal or the NB-IoT terminal) may support the initial access procedure in the legacy LTE system (e.g., Rel. 13). In this regard, the initial access procedure of the legacy LTE system may include detection (reception) of at least one of a PSS, an SSS and a PBCH (or a Narrowband PSS (NPSS), a Narrowband SSS (NSSS) and a Narrowband PBCH (NPBCH) transmitted at 180 kHz) transmitted at 1.4 MHz from a center frequency. Consequently, the user terminal can perform communication in a narrow band in both of the legacy LTE system and the future radio communication systems.

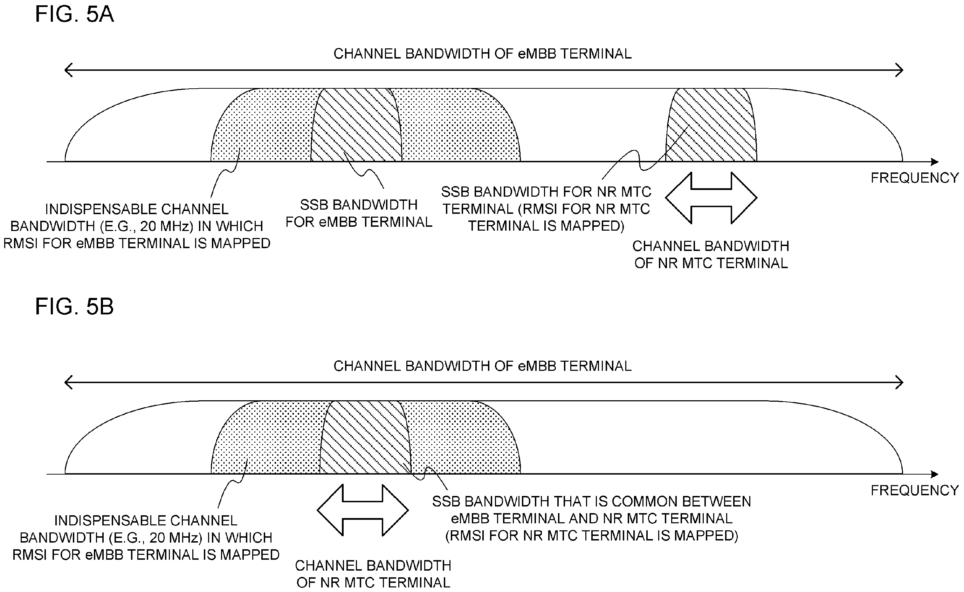

Fig. 5 is a diagram illustrating one example of an initial access procedure according to the second aspect. Figs. 5A and 5B assume that the eMBB terminal supports a channel bandwidth of 100 MHz in a case of 30 kHz or 60 kHz in subcarrier spacing (see Fig. 1).

Fig. 5A illustrates one example where respectively dedicated SSB bandwidths are provided for the NR MTC terminal and the eMBB terminal. For example, in Fig. 5A, the eMBB terminal detects an SSB in the SSB bandwidth for the eMBB terminal, and receives RMSI that is transmitted in an indispensable channel bandwidth based on information detected in the SSB. The eMBB terminal starts a random access procedure based on the RMSI obtained in the indispensable channel bandwidth.

On the other hand, the NR MTC terminal detects an SSB in the SSB bandwidth for the NR MTC terminal, and receives RMSI that is transmitted in the SSB bandwidth based on information detected in the SSB. The NR MTC terminal starts a random access procedure based on the RMSI obtained in the SSB bandwidth.

In this regard, in Fig. 5A, the SSB bandwidth for the NR MTC terminal does not overlap the indispensable channel bandwidth for the eMBB terminal, yet may overlap at least part of the indispensable channel bandwidth. Furthermore, in Fig. 5A, the SSB bandwidth is provided in the channel bandwidth (e.g., 100 MHz) for the eMBB terminal, yet may be provided outside the channel bandwidth.

Fig. 5B illustrates one example where an SSB bandwidth (common SSB bandwidth) that is common between the eMBB terminal and the NR MTC terminal is provided. For example, in Fig. 5B, the eMBB terminal detects the SSB in the common SSB bandwidth, and receives the RMSI that is transmitted in the indispensable channel bandwidth based on the information (e.g., information received via a PBCH) detected in the SSB. The eMBB terminal starts the random access procedure based on the RMSI obtained in the indispensable channel bandwidth.

Furthermore, the NR MTC terminal detects the SSB in the common SSB bandwidth, and receives the RMSI that is transmitted in the SSB bandwidth based on the information (e.g., the information received via the PBCH) detected in the SSB. The NR MTC terminal starts the random access procedure based on the RMSI obtained in the SSB bandwidth.

In addition, in Figs. 5A and 5B, the channel bandwidth of the NR MTC terminal is equal to the SSB bandwidth (e.g., 20 PRBs), yet is not limited to this. For example, the NR MTC terminal may support a channel bandwidth that is larger than the SSB bandwidth and smaller than the indispensable channel bandwidth (e.g., 100 MHz) for the eMBB terminal. In this case, after the random access procedure (e.g., after one of an RACH, a message 2, 3 or 4 and an on-demand SIB illustrated in Fig. 2), the NR MTC terminal may expand a frequency bandwidth to use from the SSB bandwidth to a supported channel bandwidth.

Furthermore, the NR MTC terminal may support a channel bandwidth (e.g., 1.4 MHz similar to that of the eMTC terminal or 200 kHz similar to that of the NB-IoT terminal) narrower than the SSB bandwidth. In this case, after the random access procedure based on the RMSI, the NR-MTC terminal may narrow a frequency bandwidth to use from the SSB bandwidth to a supported maximum channel bandwidth (e.g., 1.4 MHz or 200 kHz).

According to the second aspect, the RMSI for the NR MTC terminal is mapped in the SSB bandwidth, so that the NR MTC terminal can appropriately receive the RMSI. Furthermore, a legacy LTE system (e.g., Rel. 13)-based eMTC terminal and/or NB-IoT terminal support the initial access procedure in the SSB bandwidth, so that future radio communication systems (e.g., Rel. 16 and subsequent releases) can perform narrow band communication (e.g., communication whose channel bandwidth is 1.4 MHz or 200 kHz).

### (Third Aspect)

According to the third aspect, an NR MTC terminal supports an initial access procedure similar to that of a user terminal (e.g., eMTC terminal or an NB-IoT terminal) of a category (third category) for narrow band communication introduced in a legacy LTE system (e.g., Rel. 13).

In the legacy LTE system, user terminals including the eMTC terminal receive a PSS, an SSS and a PBCH transmitted at 1.4 MHz (6 PRBs) from a center frequency of a cell, receive a System Information Block (SIB) at 1.4 MHz based on a Master Information Block (MIB) transmitted on the PBCH, and start a random access procedure based on the SIB.

On the other hand, the NB-IoT terminal cannot detect the PSS, the SSS and the PBCH transmitted at 1.4 MHz (6 PRBs). Hence, a primary synchronization signal (NPSS), a secondary synchronization signal (NSSS) and a broadcast channel (NPBCH) for the NB-IoT terminal are transmitted at 180 kHz (1 PRB). For example, the NPSS and the NPBCH are transmitted at a periodicity of 10 subframes, and the NSSS is transmitted at a periodicity of 20 subframes.

Thus, in the legacy LTE system (e.g., Rel. 13), the NB-IoT terminal receives the NPSS, the NSSS and the NPBCH for the NB-IoT terminal, receives an SIB at 180 kHz (1 PRB) based on the MIB transmitted on the NPBCH, and starts the random access procedure based on the SIB. According to the random access procedure, the NB-IoT terminal transmits an NPRACH preamble by using a subcarrier whose subcarrier spacing is 3.75 kHz.

According to the third aspect, the NR MTC terminal may support the initial access procedure for the NB-IoT terminal or the eMTC terminal while implementing functions (communication that uses subcarrier spacings (e.g., 30 kHz and 60 kHz) other than 15 kHz and a physical channel design) of future radio communication systems (e.g., Rel. 15 and subsequent releases).

More specifically, similar to the NB-IoT terminal, the NR-MTC may support at least one of detection of the NPSS and/or the NSSS at 180 kHz (1 PRB), reception of the NPBCH and reception of the SIB. Alternatively, similar to the eMTC terminal, the NR MTC terminal may support at least one of detection of a PSS and/or an SSS at 1.4 MHz, reception of a PBCH and reception of the SIB.

Furthermore, a channel bandwidth of the NR MTC terminal may include a given number of PRBs (e.g., 2, 4, 8 or 16 PRBs) that conform to a resource allocation granularity (e.g., an RBG unit or a PRB unit) of the future radio communication systems.

According to the third aspect, system information for the NR MTC terminal may be included in the SIB for the NB-IoT terminal or the eMTC terminal, or a new SIB for the NR-MTC terminal may be separately specified.

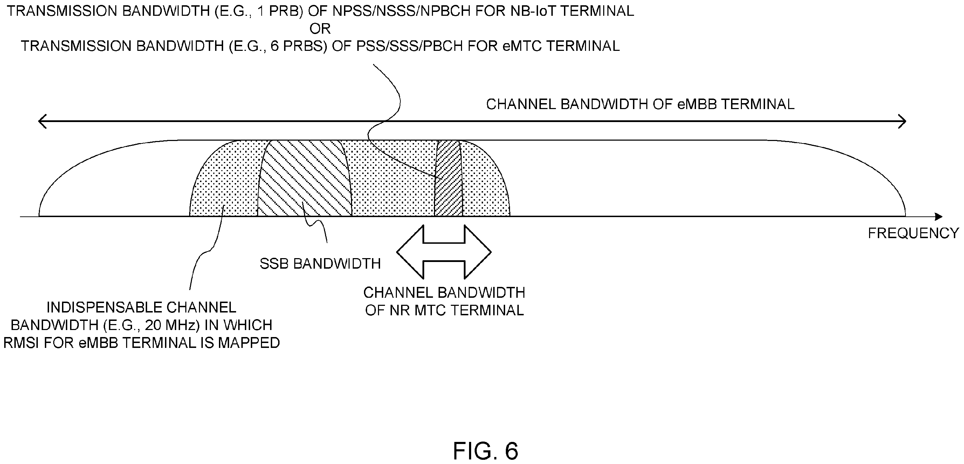

Fig. 6 is a diagram illustrating one example of the initial access procedure according to the third aspect. Fig. 6 assumes that the eMBB terminal supports a channel bandwidth of 100 MHz in a case of 30 kHz or 60 kHz in subcarrier spacing (see Fig. 1). In addition, Fig. 6 illustrates one example where the NR MTC terminal supports the initial access procedure similar to that of the NB-IoT terminal. However, the NR MTC terminal is not limited to this, and may support the initial access procedure similar to that of the eMTC terminal.

For example, in Fig. 6, the eMBB terminal detects an SSB in an SSB bandwidth, and receives RMSI that is transmitted in an indispensable channel bandwidth (e.g., 20 MHz) based on information detected in the SSB. The eMBB terminal starts the random access procedure based on the RMSI obtained in the indispensable channel bandwidth.

On the other hand, the NR MTC terminal may receive the NPSS, the NSSS and the NPBCH for the NB-IoT terminal in a given bandwidth (e.g., 180 kHz (1 PRB)), and receive the SIB based on detected information. The NR MTC terminal may start the random access procedure based on the SIB obtained in the given bandwidth.

The NR MTC terminal may transmit or receive at least one of the random access procedures (e.g., at least one of an RACH, a message 2, 3 or 4 and an on-demand SIB) in 1 PRB similar to the NB-IoT terminal, or expand a frequency bandwidth to a channel bandwidth (e.g., 2, 4, 8 or 16 PRBs) of the NR MTC terminal according to Rel. 15 and subsequent releases to transmit or receive at least one of the random access procedures (see Fig. 2).

According to the third aspect, the NR MTC terminal supports the initial access procedure of the NB-IoT terminal or the eMTC terminal, so that it is possible to easily realize narrow band communication (e.g., middle-class narrow band communication whose channel bandwidth is up to approximately 20 MHz) suitable to the future radio communication systems (e.g., Rel. 16 and subsequent releases) based on system information obtained in the initial access procedure.

### (Other Aspect)

The above first to third aspects have described an initial access procedure of an NR MTC terminal (e.g., at least one of detection of a synchronization signal, reception of broadcast information (e.g., MIB) via a broadcast channel, reception of system information (e.g., RMSI) and a random access procedure), yet are not limited to this.

For example, the above first to third aspects are applicable to a paging function. More specifically, in the first aspect, the NR-MTC terminal may be paged based on an indispensable channel bandwidth of an eMBB terminal. Furthermore, in the second aspect, the NR-MTC terminal may be paged based on an SSB bandwidth. Furthermore, in the third aspect, the NR-MTC terminal may be paged based on a channel bandwidth (200 kHz) of the NB-IoT terminal or a channel bandwidth (1.4 MHz) of the eMTC terminal.

### (Radio Communication System)

The configuration of the radio communication system according to the present embodiment will be described below. This radio communication system is applied the radio communication method according to each of the above aspects. In addition, the radio communication method according to each of the above aspects may be each applied alone or may be applied in combination.

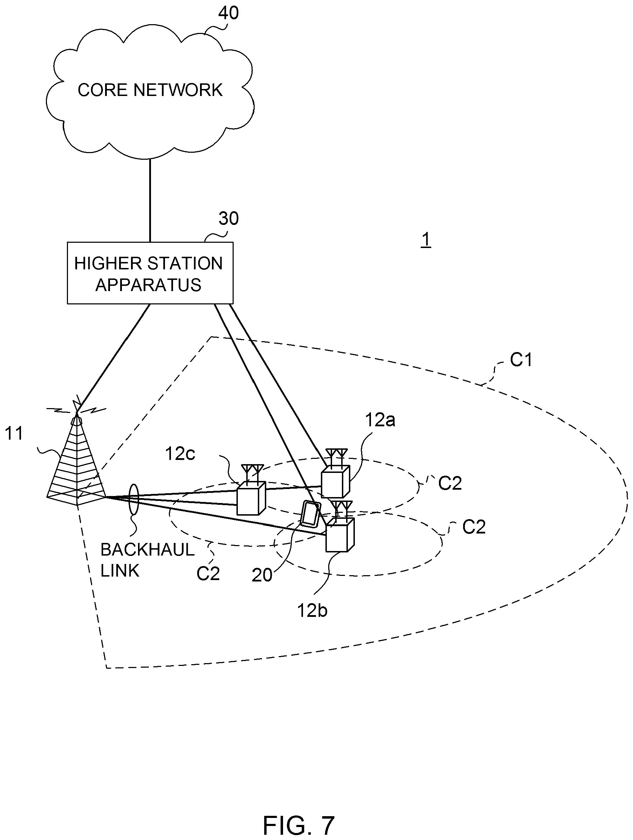

Fig. 7 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a channel bandwidth (e.g., 20 MHz) of the LTE system. In this regard, the radio communication system 1 may be referred to as LTE-Advanced (LTE-A), IMT-Advanced, 4G, 5G, Future Radio Access (FRA) or New RAT (NR).

The radio communication system 1 illustrated in Fig. 7 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In addition, the numerology may be at least one of a subcarrier spacing, a symbol length, a Cyclic Prefix (CP) length, the number of symbols per Transmission Time Interval (TTI) and a time duration of the TTI. Furthermore, the slot may be a time unit based on the numerology applied by the user terminal. The number of symbols per slot may be determined according to a subcarrier spacing.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two CCs or more). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell (carrier). A TDD cell and an FDD cell may be referred to as a TDD carrier (frame configuration second type) and an FDD carrier (frame configuration first type), respectively.

Furthermore, in each cell (carrier), a slot (also referred to as, for example, a TTI, a general TTI, a long TTI, a general subframe, a long subframe or a subframe) having a relatively long time duration (e.g., 1 ms) and/or a slot (also referred to as, for example, a mini slot, a short TTI or a short subframe) having a relatively short time duration may be applied. Furthermore, a slot of 2 or more time durations may be applied in each cell.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this. Furthermore, one or more BWPs may be configured to the user terminal 20. The BWP is composed of at least part of a carrier.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE, LTE-A, NR and 5G and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to Downlink (DL) and can apply Single Carrier-Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a channel bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and OFDMA may be used on UL. Furthermore, SC-FDMA is applicable to Sidelink (SL) used for device-to-device communication.

The radio communication system 1 uses a DL data channel (also referred to as, for example, a PDSCH: Physical Downlink Shared Channel or a DL shared channel) shared by each user terminal 20, a broadcast channel (PBCH: Physical Broadcast Channel) and an L1/L2 control channel as DL channels. DL data (at least one of user data, higher layer control information and a System Information Block (SIB)) is conveyed on the PDSCH. Furthermore, a Master Information Block (MIB) is conveyed on the PBCH.

The L1/L2 control channel includes a DL control channel (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH. The number of OFDM symbols used for the PDCCH is conveyed on the PCFICH. The EPDCCH is subjected to frequency division multiplexing with the PDSCH and is used to convey DCI similar to the PDCCH. Transmission acknowledgement information (also referred to as, for example, A/N, HARQ-ACK, an HARQ-ACK bit or an A/N codebook) of the PUSCH can be conveyed on the PHICH.

The radio communication system 1 uses a UL data channel (also referred to as, for example, a PUSCH: Physical Uplink Shared Channel or a UL shared channel) shared by each user terminal 20, a UL control channel (PUCCH: Physical Uplink Control Channel), and a random access channel (PRACH: Physical Random Access Channel) as UL channels. UL data (user data and/or higher layer control information) is conveyed on the PUSCH. Uplink Control Information (UCI) including at least one of transmission acknowledgement information (A/N or HARQ-ACK) and Channel State Information (CSI) of the PDSCH is conveyed on the PUSCH or the PUCCH. A random access preamble for establishing connection with a cell can be conveyed on the PRACH.

In addition, the radio communication system 1 may add given identifiers (e.g., an "M"PSS and an "NR MTC"PSS) to heads of various signals and/or channels used by an NR MTC terminal to distinguish from those of an eMBB terminal.

### <Radio Base Station>

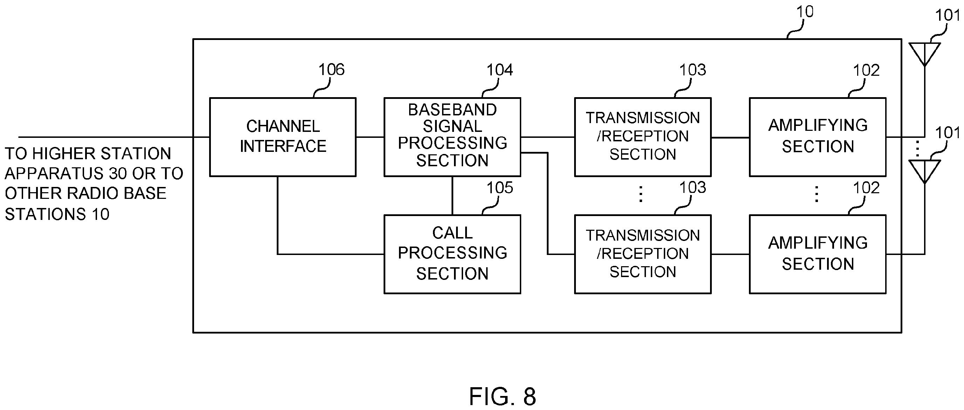

Fig. 8 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103. The radio base station 10 may compose a "reception apparatus" on UL, and compose a "transmission apparatus" on DL.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) processing), and transmission processing such as at least one of scheduling, transmission format selection, channel coding, rate matching, scrambling, Inverse Fast Fourier Transform (IFFT) processing, and precoding processing on the user data, and transfers the user data to each transmission/reception section 103. Furthermore, the baseband signal processing section 104 performs transmission processing such as channel coding and/or inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101.

The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections. Furthermore, each transmission/reception section 103 may compose an RF chain.

Meanwhile, each amplifying section 102 amplifies a radio frequency signal received by each transmission/reception antenna 101 as a UL signal. Each transmission/reception section 103 receives the UL signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on UL data included in the input UL signal, and transfers the UL data to the higher station apparatus 30 via the channel interface 106. The call processing section 105 performs at least one of call processing such as a configuration and release of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmission/reception section 103 transmits a DL signal (e.g., at least one of a DL control signal (also referred to as, for example, a DL control channel or DCI), a DL data signal (also referred to as, for example, a DL data channel or DL data), a reference signal, a synchronization signal, a broadcast channel and an SSB). Furthermore, each transmission/reception section 103 receives a UL signal (e.g., at least one of a UL controls signal (also referred to as, for example, a UL control channel or UCI), a UL data signal (also referred to as, for example, a UL data channel or UL data) and a reference signal).

Furthermore, each transmission/reception section 103 may transmit higher layer control information (e.g., at least one of an MAC CE, control information of an RRC signaling, broadcast information (e.g., MIB) and system information (e.g., an SIB, RMSI or OSI)).

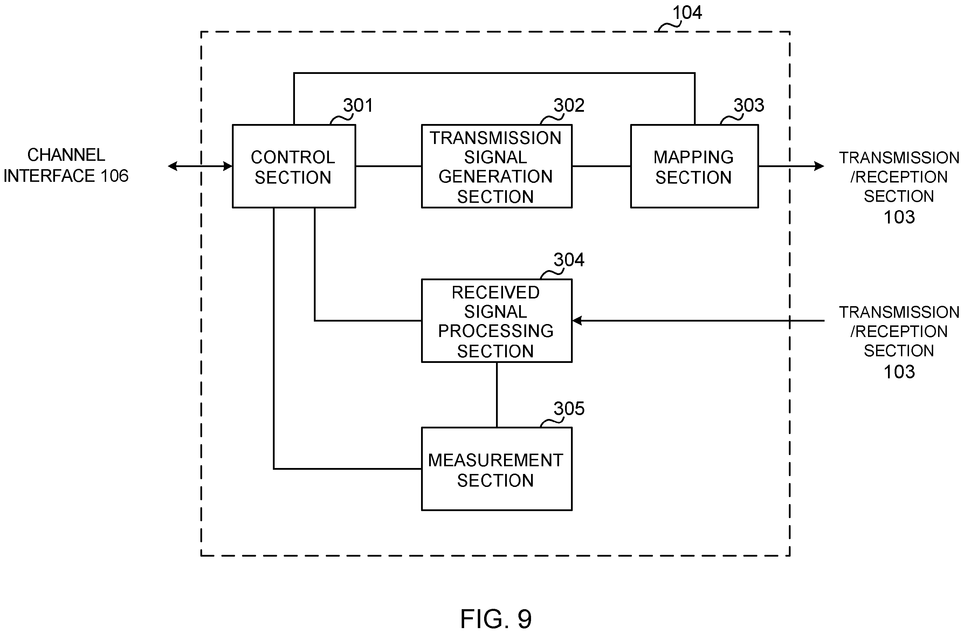

Fig. 9 is a diagram illustrating one example of a function configuration of the radio base station according to the present embodiment. In addition, Fig. 9 mainly illustrates function blocks of characteristic portions according to the present embodiment, and assumes that the radio base station 10 includes other function blocks, too, that are necessary for radio communication. As illustrated in Fig. 9, the baseband signal processing section 104 includes a control section 301, a transmission signal generating section 302, a mapping section 303, a received signal processing section 304 and a measurement section 305.

The control section 301 controls the entire radio base station 10. The control section 301 controls at least one of, for example, DL signal generation of the transmission signal generating section 302, DL signal mapping of the mapping section 303, UL signal reception processing (e.g., demodulation) of the received signal processing section 304, and measurement of the measurement section 305. Furthermore, the control section 301 may control scheduling of a data channel (including a DL data channel and/or a UL data channel).

Furthermore, the control section 301 controls communication with the one or more user terminals 20 that support one or more channel bandwidths. More specifically, the control section 301 may control communication with the user terminal 20 (e.g., NR MTC terminal) of a first category that supports a channel bandwidth equal to or narrower than an indispensable channel bandwidth defined per subcarrier spacing for the user terminal 20 (e.g., eMBB terminal) of a second category.

Furthermore, the control section 301 may control an initial access procedure of the user terminal 20. More specifically, the control section 301 may control transmission of at least one of the synchronization signal and the broadcast channel. Furthermore, the control section 301 may control mapping of system information (e.g., the RMSI and/or the SIB) in a given bandwidth equal to or narrower than the above indispensable channel bandwidth.

For example, the above given bandwidth in which the system information for the user terminal 20 (e.g., NR MTC terminal) of the first category is mapped may be equal to the indispensable channel bandwidth (first aspect). Furthermore, the given bandwidth may be equal to the SSB bandwidth (SSB transmission bandwidth) (second aspect). Furthermore, the given bandwidth may be 1.4 MHz or 200 kHz at maximum (third aspect).

Furthermore, the control section 301 may control the random access procedure of the user terminal 20. More specifically, the control section 301 may control a random access procedure that uses at least part of the channel bandwidth supported by the user terminal 20 (e.g., NR MTC terminal) of the first category.

The control section 301 can be composed of a controller, a control circuit or a control apparatus described based on the common knowledge in the technical field according to the present invention.

The transmission signal generating section 302 may generate the DL signal (including at least one of the DL data (channel), the DCI, the DL reference signal and the control information of the higher layer signaling) based on an instruction from the control section 301, and output the DL signal to the mapping section 303.

The transmission signal generating section 302 can be composed of a signal generator, a signal generating circuit or a signal generating apparatus described based on the common knowledge in the technical field according to the present invention.

The mapping section 303 maps the DL signal generated by the transmission signal generating section 302, on given radio resources based on the instruction from the control section 301, and outputs the DL signal to each transmission/reception section 103. For example, the mapping section 303 maps the reference signal on the given radio resource by using an arrangement pattern determined by the control section 301.

The mapping section 303 can be composed of a mapper, a mapping circuit or a mapping apparatus described based on the common knowledge in the technical field according to the present invention.

The received signal processing section 304 performs reception processing (e.g., at least one of demapping, demodulation and decoding) on the UL signal transmitted from the user terminal 20. More specifically, the received signal processing section 304 outputs the received signal and/or the signal after the reception processing to the measurement section 305.

The received signal processing section 304 can be composed of a signal processor, a signal processing circuit or a signal processing apparatus described based on the common knowledge in the technical field according to the present invention. Furthermore, the received signal processing section 304 can compose the reception section according to the present invention.

The measurement section 305 may measure UL channel quality based on, for example, received power (e.g., Reference Signal Received Power (RSRP)) and/or received quality (e.g., Reference Signal Received Quality (RSRQ)) of the reference signal. The measurement section 305 may output a measurement result to the control section 301.

### <User Terminal>

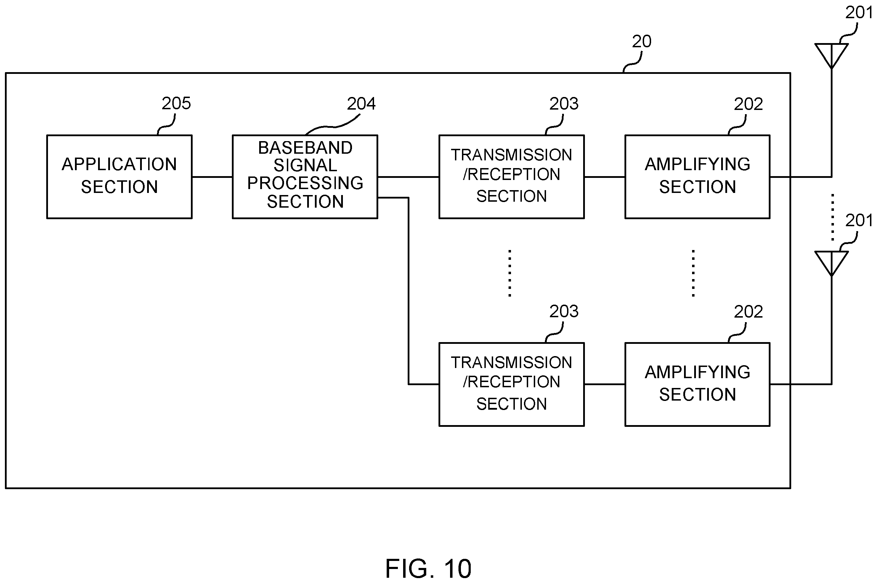

Fig. 10 is a diagram illustrating one example of an overall configuration of the user terminal according to the present embodiment. The user terminal 20 includes pluralities of transmission/reception antennas 201 for MIMO transmission, amplifying sections 202 and transmission/reception sections 203, a baseband signal processing section 204 and an application section 205. The user terminal 20 may compose a "transmission apparatus" on UL, and compose a "reception apparatus" on DL.

The respective amplifying sections 202 amplify radio frequency signals received at a plurality of transmission/reception antenna 201. Each transmission/reception section 203 receives a DL signal amplified by each amplifying section 202. Each transmission/reception section 203 performs frequency conversion on the received signal into a baseband signal, and outputs the baseband signal to the baseband signal processing section 204.

The baseband signal processing section 204 performs at least one of FFT processing, error correcting decoding and retransmission control reception processing on the input baseband signal. The baseband signal processing section 204 transfers DL data to the application section 205. The application section 205 performs processing related to layers higher than a physical layer and an MAC layer.

On the other hand, the application section 205 inputs UL data to the baseband signal processing section 204. The baseband signal processing section 204 performs at least one of retransmission control processing (e.g., HARQ processing), channel coding, rate matching, puncturing, Discrete Fourier Transform (DFT) processing and IFFT processing on the UL data, and transfers the UL data to each transmission/reception section 203. The baseband signal processing section 204 performs at least one of channel coding, rate matching, puncturing, DFT processing and IFFT processing on the UCI (e.g., at least one of A/N of the DL signal, Channel State Information (CSI) and a Scheduling Request (SR)), too, and transfers the UCI to each transmission/reception section 203.

Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 receives the DL signal (e.g., at least one of the DL control signal (also referred to as, for example, the DL control channel or the DCI), the DL data signal (also referred to as, for example, the DL data channel or the DL data), the reference signal, the synchronization signal, the broadcast channel and the SSB). Furthermore, each transmission/reception section 203 transmits the UL signal (e.g., at least one of the UL control signal (also referred to as, for example, the UL control signal or the UCI), the UL data signal (also referred to as, for example, the UL data channel or the UL data) and the reference signal).

Furthermore, each transmission/reception section 203 may receive the higher layer control information (e.g., at least one of the MAC CE, the control information of the RRC signaling, the broadcast information (e.g., MIB) and the system information (e.g., the SIB, the RMSI or the OSI)).

The transmission/reception sections 203 can be composed as transmitters/receivers, transmission/reception circuits or transmission/reception apparatuses described based on the common knowledge in the technical field according to the present invention. Furthermore, the transmission/reception sections 203 may be composed as an integrated transmission/reception section or may be composed of transmission sections and reception sections. Furthermore, each transmission/reception section 203 may compose the RF chain.

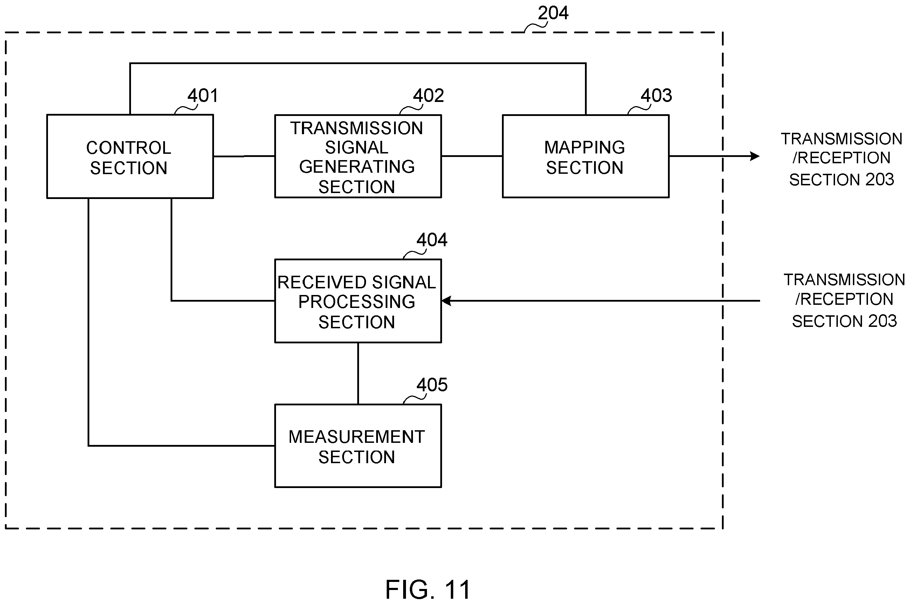

Fig. 11 is a diagram illustrating one example of a function configuration of the user terminal according to the present embodiment. In addition, Fig. 11 mainly illustrates function blocks of characteristic portions according to the present embodiment, and assumes that the user terminal 20 includes other function blocks, too, that are necessary for radio communication. As illustrated in Fig. 11, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls at least one of, for example, UL signal generation of the transmission signal generating section 402, UL signal mapping of the mapping section 403, DL signal reception processing of the received signal processing section 404 and measurement of the measurement section 405.

The control section 401 supports the initial access procedure of the user terminal 20. The user terminal 20 may be the user terminal 20 (e.g., eMBB terminal) of the second category, or may be the user terminal 20 (e.g., NR MTC terminal) of the first category that supports the channel bandwidth equal to or narrower than the indispensable channel bandwidth defined per subcarrier spacing for the user terminal 20 of the second category. Furthermore, the user terminal 20 may be the eMTC terminal or the NB-IoT terminal in which given functions have been implemented.

More specifically, the control section 401 may control reception of at least one of the synchronization signal and the broadcast channel. Furthermore, the control section 401 may control reception of the system information that is mapped in the given bandwidth equal to or narrower than the above indispensable channel bandwidth.

The user terminal 20 (e.g., NR MTC terminal) of the first category may support the indispensable channel bandwidth (first aspect). In this case, the given bandwidth in which the system information for the user terminal 20 is mapped may be equal to the indispensable channel bandwidth.

Furthermore, the user terminal 20 (e.g., NR MTC terminal) of the first category may support the transmission bandwidth (SSB bandwidth) of a block (SSB) including at least one of the synchronization signal and the broadcast channel (second aspect). In this case, the given bandwidth in which the system information for the user terminal 20 is mapped may be equal to the SSB bandwidth.

Furthermore, the user terminal 20 (e.g., NR MTC terminal) of the first category may support reception of at least one of a synchronization signal and a broadcast channel for narrow band communication (e.g., eMTC or NB-IoT) (third aspect). In this case, the given bandwidth in which the system information for the user terminal 20 is mapped may be 1.4 MHz or 200 kHz at maximum.

Furthermore, the control section 401 may control the random access procedure that uses at least part of the channel bandwidth supported by the user terminal 20 (e.g., NR MTC terminal) of the first category based on the system information (e.g., the SIB or the RMSI).

The control section 401 can be composed of a controller, a control circuit or a control apparatus described based on the common knowledge in the technical field according to the present invention.

The transmission signal generating section 402 generates (e.g., encodes, rate-matches, punctures or modulates) retransmission control information of the UL signal and the DL signal based on an instruction from the control section 401, and outputs the retransmission control information to the mapping section 403. The transmission signal generating section 402 can be composed of a signal generator, a signal generating circuit or a signal generating apparatus described based on the common knowledge in the technical field according to the present invention.

The mapping section 403 maps the retransmission control information of the UL signal and the DL signal generated by the transmission signal generating section 402, on radio resources based on an instruction from the control section 401, and outputs the retransmission control information to each transmission/reception section 203. For example, the mapping section 403 maps a reference signal on a given radio resource by using an arrangement pattern determined by the control section 401.

The mapping section 403 can be composed of a mapper, a mapping circuit or a mapping apparatus described based on the common knowledge in the technical field according to the present invention.

The received signal processing section 404 performs reception processing (e.g., at least one of demapping, demodulation and decoding) on the DL signal. For example, the received signal processing section 404 may demodulate the DL data channel by using the reference signal of the arrangement pattern determined by the control section 401.

Furthermore, the received signal processing section 404 outputs the received signal and/or the signal after the reception processing to the control section 401 and/or the measurement section 405. The received signal processing section 404 outputs, for example, higher layer control information of a higher layer signaling and L1/L2 control information (e.g., a UL grant and/or a DL assignment) to the control section 401.

The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The measurement section 405 measures a channel state based on a reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiment illustrate blocks in function units. These function blocks (components) are realized by an optional combination of hardware and/or software. Furthermore, means for realizing each function block is not limited in particular. That is, each function block may be realized by one physically and/or logically coupled apparatus or may be realized by a plurality of these apparatuses formed by connecting two or more physically and/or logically separate apparatuses directly and/or indirectly (by way of, for example, wired connection and/or radio connection).

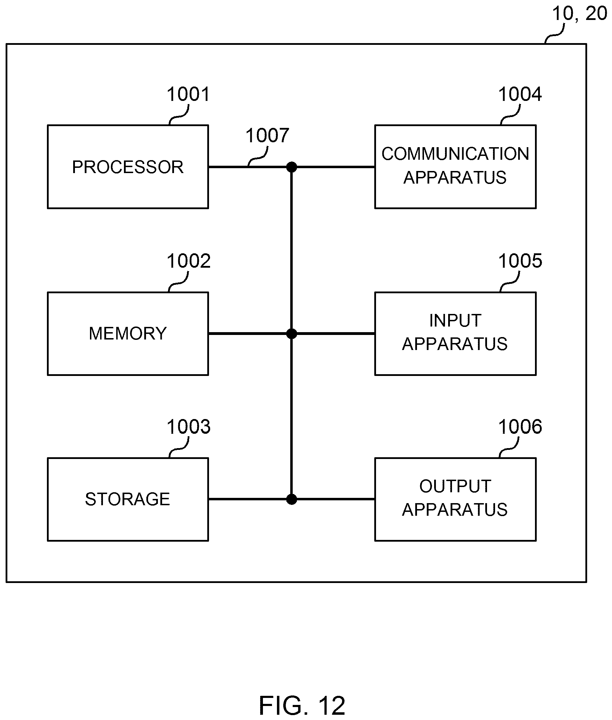

For example, the radio base station and the user terminal according to the present embodiment may function as computers that perform processing of the radio communication method according to the present invention. Fig. 12 is a diagram illustrating one example of the hardware configurations of the radio base station and the user terminal according to the present embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by 1 processor or processing may be executed by 1 or more processors concurrently or successively or by another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control at least one of communication of the communication apparatus 1004 and reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus illustrated in Fig. 12 is connected by the bus 1007 that communicates information. The bus 1007 may be composed of a single bus or may be composed of different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may realize part or all of each function block. For example, the processor 1001 may be implemented by at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms.

In this regard, the TTI refers to, for example, a minimum time unit of scheduling for radio communication. For example, the radio base station performs scheduling for allocating radio resources (a frequency bandwidth and/or transmission power that can be used in each user terminal) in TTI units to each user terminal. In this regard, a definition of the TTI is not limited to this. The TTI may be a transmission time unit of a channel-coded data packet (transport block), or may be a processing unit of scheduling and/or link adaptation. In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (a TTI according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe or a short subframe.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In addition, the RB may be referred to as a Physical Resource Block (PRB: Physical RB), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the number of symbols included in a slot or a mini slot, the number of subcarriers included in an RB, the number of symbols in a TTI, a symbol length and a Cyclic Prefix (CP) length can be variously changed.

Furthermore, the information and parameters described in this description may be expressed by absolute values, may be expressed by relative values with respect to given values or may be expressed by other corresponding information. For example, a radio resource may be instructed by a given index. Furthermore, numerical expressions that use these parameters may be different from those explicitly disclosed in this description.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive ones.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by, for example, an MAC Control Element (MAC CE).

Furthermore, notification of given information (e.g., notification of "being X") is not limited to explicit notification, and may be performed implicitly (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide a communication service in this coverage.

In this description, the terms "Mobile Station (MS)", "user terminal", "User Equipment (UE)" and "terminal" can be interchangeably used. The base station will be also referred to as a term such as a fixed station, a NodeB, an eNodeB (eNB), an access point, a transmission point, a reception point, a femtocell or a small cell in some cases.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, "uplink" and/or "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, specific operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. Elements may be coupled or connected physically or logically or by way of a combination of physical and logical coupling or connection. It can be understood that, when used in this description, the two elements are "connected" or "coupled" with each other by using 1 or more electric wires, cables and/or printed electrical connection, and by using electromagnetic energy having wavelengths in radio frequency domains, microwave domains and (both of visible and invisible) light domains in some non-restrictive and non-comprehensive examples.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the gist and the scope of the present invention defined by the recitation of the claims. Accordingly, the disclosure of this description is intended for exemplary explanation, and does not have any restrictive meaning to the present invention.

## Claims

1. A user terminal that is a user terminal of a first category that supports a channel bandwidth equal to or narrower than an indispensable channel bandwidth defined per subcarrier spacing for a user terminal of a second category, the user terminal comprising:
a reception section that receives at least one of a synchronization signal and a broadcast channel; and
a control section that controls reception of system information that is mapped in a given bandwidth equal to or narrower than the indispensable channel bandwidth.

2. The user terminal according to claim 1, wherein
the user terminal of the first category supports the indispensable channel bandwidth, and
the given bandwidth in which the system information is mapped is equal to the indispensable channel bandwidth.

3. The user terminal according to claim 1, wherein
the user terminal of the first category supports a transmission bandwidth of a block including at least one of the synchronization signal and the broadcast channel, and
the given bandwidth in which the system information is mapped is equal to the transmission bandwidth of the block.

4. The user terminal according to claim 1, wherein the user terminal of the first category supports reception of at least one of a synchronization signal and a broadcast channel for a user terminal of a third category having a channel bandwidth of 1.4 MHz or 200 kHz.

5. The user terminal according to any one of claims 1 to 4, wherein the control section controls a random access procedure based on the system information, the random access procedure using at least part of the channel bandwidth supported by the user terminal of the first category.

6. A radio communication method of a user terminal of a first category that supports a channel bandwidth equal to or narrower than an indispensable channel bandwidth defined per subcarrier spacing for a user terminal of a second category, the radio communication method comprising:
receiving at least one of a synchronization signal and a broadcast channel; and
controlling reception of system information that is mapped in a given bandwidth equal to or narrower than the indispensable channel bandwidth.
